# NEUE EUROPÄISCHE PATENTSCHRIFT

(11) **EP 3 183 950 B2**
(45) Veröffentlichungstag und Bekanntmachung des Hinweises auf die Entscheidung über den Einspruch: **19.08.2026**
(45) Hinweis auf die Patenterteilung: 29.12.2021
(21) Anmeldenummer: 16200670.4
(22) Anmeldetag: 25.11.2016
(51) Int. Cl.: A01D 75/20

(54) **LANDWIRTSCHAFTLICHES ARBEITSGERÄT MIT MITTELN ZUR TIERERKENNUNG**
AGRICULTURAL WORKING DEVICE WITH MEANS FOR IDENTIFYING ANIMALS
ENGIN DE TRAVAIL AGRICOLE AVEC UN MOYEN DE DÉTECTION D'ANIMAUX

(30) Priorität: 27.11.2015 DE 102015015327
(43) Veröffentlichungstag der Anmeldung: 28.06.2017
(73) Patentinhaber: PÖTTINGER Landtechnik GmbH, 4710 Grieskirchen (AT)
(72) Erfinder: Pöttinger, Klaus, 4710 Grieskirchen (AT)
(74) Vertreter: Lorenz Seidler Gossel Part. mbB

(56) Entgegenhaltungen:
- CH-A5- 677 308
- DE-A1- 10 016 688
- DE-A1- 10 244 822
- DE-A1- 10 258 347
- DE-A1- 19 718 110
- DE-A1- 3 216 977
- DE-B4- 102005 055 919
- US-A- 5 721 421
- Wilddetektion - Auszug aus CBA Heft 88
- "Near-infrared spectroscopy", WIKIPEDIA, THE FREE ENCYCLOPEDIA, 23 September 2022 (2022-09-23), XP055969345, Retrieved from the Internet <URL:https://en.wikipedia.org/wiki/Near-infrared_spectroscopy> [retrieved on 20221010]
- "Elektromagnetische Wellen", WIKIPEDIA, 26 October 2020 (2020-10-26), XP055969344, Retrieved from the Internet <URL:https://de.wikipedia.org/wiki/Elektromagnetische_Welle> [retrieved on 20221010]
- "Optische Sensorik", 1 January 2012, VIEWEG+TEUBNER, ISBN: 978-3-8348-1449-4, article LÖFFLER-MANG MARTIN: "23. Spektrometer", pages: 192 - 195, XP055969346

## Beschreibung

Die vorliegende Erfindung betrifft ein landwirtschaftliches Arbeitsgerät, insbesondere Grünlandgerät, mit zumindest einem Arbeitsaggregat und einer Erfassungseinrichtung zum Erfassen von Tieren in der Arbeitsbahn des Arbeitsaggregats, wobei die Erfassungseinrichtung zumindest einen Sensor zum Abtasten der Arbeitsbahn in Fahrtrichtung vor dem Arbeitsaggregat und eine Auswerteeinheit zum Auswerten des Signals des Sensors zur Tiererkennung aufweist.

Bei der Grünlandbearbeitung ist für einen Maschinenführer oft schwer zu erkennen, ob sich ein Tier in der Arbeitsbahn befindet, da sich das Tier bei Annäherung einer Schlepper-Anbaugeräte-Kombination oft vor Schreck duckt und bewegungslos verharrt, so dass es im noch ungemähten Erntegut, beispielsweise höherem Gras kaum zu erkennen ist. Dies ist besonders bei landwirtschaftlichen Arbeitsgeräten schwierig, die noch ungemähtes Erntegut verarbeiten, wie beispielsweise Mähmaschinen, da hier die Tiere besonders schwer zu erkennen sind, kann grundsätzlich aber auch bei anderen Arbeitsaggregaten ein Problem sein.

Um die Tiere vor Maschinenberührung und entsprechenden Verletzungen zu schützen, umgekehrt aber auch die Maschinen vor Wildschaden zu schützen, werden daher zunehmend Erfassungseinrichtungen an dem jeweiligen Arbeitsgerät oder auch an dem das Arbeitsgerät ziehenden oder schiebenden Schlepper eingesetzt, um Tiere in der Arbeitsbahn der Arbeitsaggregate automatisch zu erfassen und ein Warnsignal abzusetzen bzw. ggf. auch die Arbeitsaggregate zu stoppen. Entsprechende Sensoren tasten hierbei den Boden bzw. den zu bearbeitenden Arbeitskorridor ab, wobei mittels Auswerteeinheiten versucht wird, aus bestimmten Signalmustern eine Tiererkennung abzuleiten. Dies ist jedoch schwierig, da die Abtastsignale auf diverse Umgebungseinflüsse reagieren, was es schwierig macht, durch Tiere bedingte Signalausschläge von anderen Signalausschlägen zu unterscheiden. Dies gilt in erhöhtem Maße bei Arbeitsgeräten, die noch ungeschnittenes Erntegut bearbeiten, da von dem noch stehenden Erntegut diverse Signalreflexionen erzeugt und durch zusätzliche, die Bodenkontur widerspiegelnde Signalreflexionen überlagert werden. Gleichermaßen treten solche Probleme jedoch auch auf, wenn sich ein Tier in einem beispielsweise großen, zusammengerechten Schwad versteckt.

Die Schrift DE 102 58 347 B4 beschreibt eine Einrichtung zur Detektion von Vogelgelegen und Tieren im Grünlandbereich, wobei hier mittels Infrarotsensoren in Kombination mit einer Videokamera die Zwischenfurchen zwischen benachbarten Pflanzreihen zeilenweise abgetastet werden und anhand des Signalpegels entschieden wird, ob in der jeweils abgetasteten Zeile ein Vogelgelege bzw. Tier vorhanden ist. Diese Signalpegel-Überwachung geht davon aus, dass bei einem warmen Objekt wie einem Tier oder Vogelgelege der Strahlungspegel ansteigt und daher im Signal des jeweiligen Infrarotsensors ein entsprechender Signalausschlag auftritt.

Diese vorbekannte Tiererkennung ist in ihrer Funktionsweise jedoch auf Reihenpflanzungen wie im Maisanbau und einfache Bodenverhältnisse zwischen den Pflanzenreihen angewiesen bzw. kaum mehr funktionsfähig, wenn komplexere Grünlandflächen wie beispielsweise ungemähte Wiesen von einer Mähmaschine zu bearbeiten sind oder keine statischen Tiergelege mit fester, meist runder Konturierung zu erfassen sind, sondern sich bewegende Tiere variierender Umrisskontur und Größe. Aus der DE 32 16 977 A1 ist ferner ein landwirtschaftliches Gerät zur Wilderkennung bekannt, das mit Hilfe von Infrarot- und UV-Detektoren in Deckung befindliche Wildtiere lokalisiert. Dabei sollen auf einer horizontalen Stange eine Vielzahl von Detektoren angeordnet sein, die das Feld schräg nach vorne mit einem Signal abtasten.

Weitere Vorrichtungen zur Tiererkennung sind aus den Schriften CH 677 308 A5, DE 37 30 449 C2, DE 10 2009 039601 A1 oder DE 100 16 688 A1 bekannt.

Hiervon ausgehend liegt der vorliegenden Erfindung die Aufgabe zugrunde, ein verbessertes landwirtschaftliches Arbeitsgerät der eingangs genannten Art zu schaffen, das Nachteile des Standes der Technik vermeidet und Letzteren in vorteilhafter Weise weiterbildet. Insbesondere soll eine verlässlicherer Tiererkennung, insbesondere Kitz- und Wilderkennung, auch bei komplexeren Boden- und Grünlandverhältnissen wie ungeschnittenem Erntegut mit noch beherrschbaren Datenvolumina erreicht werden. Erfindungsgemäß wird die genannte Aufgabe durch ein landwirtschaftliches Arbeitsgerät gemäß Anspruch 1 gelöst. Bevorzugte Ausgestaltungen der Erfindung sind Gegenstand der abhängigen Ansprüche.

Es wird also vorgeschlagen, den zumindest einen Sensor zum Abtasten der Arbeitsbahn relativ steil nach unten mit einem begrenzten Abtastbereich den Boden abtasten zu lassen, um zu vermeiden, dass der meist aufrechte Feldbewuchs wie Gras oder Halmgut das Sensorsignal zu stark abfälscht. Nach einem Aspekt der vorliegenden Erfindung kann der Sensor einen Abtastbereich von +/-10° bis +/-65° mit einer nach unten gerichteten Hauptabtastrichtung aufweisen. Die genannte Hauptabtastrichtung kann dabei im Wesentlichen senkrecht nach unten auf den Boden oder ggf. auch leicht spitzwinklig zur Vertikalen geneigt sein, wobei der Abtastbereich mit den genannten Winkeln +/-10° bis +/-65° vorzugsweise symmetrisch um die genannte Hauptabtastrichtung herum vorgesehen sein kann.

Vorteilhafterweise kann der Sensor einen Abtastbereich von +/-35° bis +/-55° aufweisen und die Senkrechte nach unten einschließen. Wenn die Hauptabtastrichtung mit der Senkrechten zusammenfällt, kann der Sensor +/-35° bis +/-55°, insbesondere etwa +/-45° um die Senkrechte herum abtasten.

Der Sensor kann den genannten Abtastbereich von beispielsweise +/-45° bei starrer Sensorausrichtung durch Aussenden eines sich entsprechend aufweitenden elektromagnetischen Wellenkegels von beispielsweise +/-45° und/oder einem Scan-Bereich, der einlaufende elektromagnetische Wellen bzw. Lichtwellen in einem entsprechenden Winkelbereich erfasst, realisieren. Alternativ oder zusätzlich kann der Sensor hin- und herbewegt bzw. zyklisch bewegt werden, um den genannten Abtastbereich abzufahren.

In vorteilhafter Weiterbildung der Erfindung ist der zumindest eine Sensor dabei derart ausgebildet und angeordnet, dass der auf den abgetasteten Boden geworfene Abtastfleck nur eine relativ begrenzte Größe hat, um keine zu großen Inhomogenitäten im abgetasteten Bereich, beispielsweise durch Bewuchs, Erdklumpen, Steine und Äste zu haben. Insbesondere kann in vorteilhafter Weiterbildung der Erfindung der Sensor derart ausgebildet und angeordnet sein, dass der auf den Boden geworfene Abtastbereich einen Durchmesser im Bereich von 3 cm bis 50 cm, vorzugsweise 5 bis 20 cm aufweist. Ein guter Kompromiss zwischen ausreichendem Erfassungsbereich und scharfem, eindeutigem Sensorsignal kann erreicht werden, wenn der Abtastbereich etwa 10 cm im Durchmesser beträgt.

Je nach Kegelwinkel des Abtastbereichs kann der Sensor in unterschiedlicher Höhe über dem Boden angeordnet werden. In Weiterbildung der Erfindung kann vorgesehen sein, dass der Sensor im Bereich von etwa 0,2 m bis 4 m über dem Boden positioniert ist, wobei eine Positionshöhe im Bereich von 50 cm bis 150 cm vorteilhaft sein kann.

Vorteilhafterweise ist der Sensor in Fahrtrichtung betrachtet vor dem Arbeitsaggregat und/oder über bzw. oberhalb des Arbeitsaggregats angeordnet.

Der zumindest eine Sensor kann an dem Arbeitsgerät starr oder beweglich angeordnet sein, wobei eine bewegliche Anordnung beispielsweise vorgesehen sein kann, um durch eine hin- und hergehende oder zyklische Bewegung den gewünschten Abtastbereich abzutasten.

Ist das landwirtschaftliche Arbeitsgerät als Anbaugerät zum Anbau an einen Schlepper ausgebildet, kann der genannte Sensor unmittelbar an dem Anbaugerät, beispielsweise einem Rahmenteil oder einem mit dem Rahmen verbundenen Sensorträger angeordnet sein. Alternativ oder zusätzlich kann jedoch auch zumindest ein Sensor an dem Schlepper angebracht sein, beispielsweise an einem Chassisteil oder einem mit dem Schlepper verbundenen Sensorträger.

In vorteilhafter Weiterbildung kann die Sensoreinrichtung einschließlich der zugeordneten Auswerteeinrichtung als modulare Einheit ausgebildet sein, die abnehmbar an dem Anbaugerät und/oder dem Schlepper montierbar bzw. ankuppelbar ausgebildet sein kann. Ein solches Sensormodul mit Ankuppelmitteln kann in einfacher Weise für verschiedene Anbaugeräte eingesetzt werden.

In Weiterbildung der Erfindung können mehrere Sensoren an einem gemeinsamen Sensorbalken angeordnet sein, der sich vorteilhafterweise in seiner Betriebsstellung quer zur Fahrtrichtung liegend erstrecken kann. Der genannte Sensorbalken kann hierbei starr angebracht sein. Alternativ kann auch ein schwenkbarer und/oder klappbarer Sensorbalken vorgesehen sein, der zwischen einer Betriebsstellung und einer Transportstellung hin und her verbracht werden kann, beispielsweise um die begrenzte Straßenfahrbreite einhalten zu können. Hierbei kann der Sensorbalken als Ganzes verschwenkbar oder verlagerbar ausgebildet sein oder auch nur einen verschwenk- oder verlagerbaren Balkenabschnitt aufweisen.

An einem solchen Sensorbalken können insbesondere mehrere Sensoren nebeneinander angeordnet sein, so dass sich die Abtastbereiche der Sensoren ergänzen und zumindest näherungsweise die gesamte Arbeitsbreite des Arbeitsaggregats bzw. die hiervon überstrichene Arbeitsbahn abtasten. Die genannte Ergänzung kann hierbei bedeuten, dass sich die Abtastbereiche der mehreren Sensoren quer zur Fahrtrichtung nahtlos ergänzen, einander überlappen oder auch voneinander beabstandet sind, wobei bei einer Beabstandung der Abtastbereiche vorteilhafterweise die dazwischen liegenden, nicht abgetasteten Bereiche klein genug sind, um kein Tier unerkannt zu lassen.

Der zumindest eine Sensor kann grundsätzlich verschieden ausgebildet sein. Nach einem weiteren Aspekt der vorliegenden Erfindung kann zumindest ein im sichtbaren Bereich arbeitender optischer Sensor und/oder zumindest ein im Infrarotbereich, insbesondere im Nahinfrarotbereich arbeitender Infrarotsensor vorgesehen sein. Insbesondere kann der Sensor dabei derart ausgebildet sein, dass zumindest ein Wellenlängenbereich im sichtbaren Lichtbereich und/oder zumindest ein Wellenlängenbereich im Nahinfrarotbereich detektierbar und elektronisch auswertbar ist, wobei die elektronische Auswertung im Sensor selbst erfolgen kann, wobei anstelle einer in den Sensor integrierten Auswerteeinheit auch eine separate Auswerteeinheit vorgesehen sein kann.

Vorteilhafterweise kann ein Sensor vorgesehen sein, der sowohl im sichtbaren Bereich als auch im Nahinfrarotbereich arbeiten kann. Alternativ oder zusätzlich können auch mehrere Sensoren vorgesehen sein, von denen zumindest einer im sichtbaren Bereich arbeitet und ein weiterer im Infrarotbereich, insbesondere im Nahinfrarotbereich arbeiten kann.

Vorteilhafterweise kann der zumindest eine Sensor dabei dazu ausgebildet sein, gepulstes Licht weiter zu verarbeiten, wobei eine Lichtquelle zum Abgeben eines solchen gepulsten Lichts in den Sensor integriert oder hiervon separat vorgesehen sein kann. Um den Sensor an das gepulste Licht anzupassen bzw. damit zu synchronisieren, kann dem zumindest einen Sensor ein Filter zugeordnet sein, vorzugsweise in Form eines Lock-in-Filters, der das gepulste Licht bzw. das vom Boden bzw. einem darauf befindlichen Tier zurückgeworfene Lichtsignal filtert und nicht auf das gepulste Licht zurückgehende Lichtströme zumindest weitgehend herausfiltert und vom Sensor fern hält.

Gemäß einem weiteren Aspekt kann vorgesehen sein, nicht mehr nur eine einfache Pegelüberwachung des Abtastsignals vorzunehmen und bei Signalausschlägen vorbestimmter Größe auf ein Tier oder einen Stein bzw. einen Erdklumpen oder Ähnliches zu schließen, sondern das Abtastsignal hinsichtlich seines Wellenlängenspektrums qualitativ zu analysieren. Erfindungsgemäß ist die Auswerteeinheit derart ausgebildet, dass das Signal des zumindest einen Infrarotsensors in verschiedenen Wellenlängenfenstern ausgewertet und ein Signalverlauf über die Wellenlänge bestimmt wird, wobei dann aus dem Signalverlauf über die Wellenlänge das Vorhandensein eines Tiers bestimmt wird. Dieser Ansatz geht von der Erkenntnis aus, dass ein Tier bei Abtastung durch einen Infrarotsensor eine Antwort bzw. ein Signal erzeugt, das zwar möglicherweise denselben oder einen vergleichbaren Pegel wie das von einem Stein, der Bodenoberfläche oder dem Schnittgut erzeugte Signal aufweist, jedoch eine andere Signalform besitzt, wenn man das Signal über in verschiedenen Wellenlängenbereichen betrachtet, insbesondere bei verschiedenen Wellenlängen des Nahinfrarot- und sichtbaren Infrarotbereichs und/oder Wellenlängen des für das menschliche Auge sichtbaren Bereichs, wobei verschiedene Wellenlängenfenster im Bereich von etwa 400 nm bis 1700 nm ausgewertet werden können und/oder der Sensor eine Bandbreite von etwa 400 nm bis 1700 nm aufweisen kann. Ein von dem zumindest einen Sensor ertastetes Kitz beispielsweise erzeugt eine andere Signalkurve über einem bestimmten Wellenlängenbereich betrachtet als dies beispielsweise ein Stein tut. Es kann daher anhand der Signalkurve bzw. des Signalverlaufs und/oder der Signalwerte in verschiedenen Wellenlängenbereichen und dessen bzw. deren Charakteristika deutlich besser entschieden werden, ob das erfasste Objekt ein Tier ist oder ein anderes Hindernis, als wenn man nur den Signalpegel bzw. die Höhe des Signalausschlags betrachtet.

In Weiterbildung der Erfindung werden hinsichtlich des von dem zumindest einen Sensor bereitgestellten Signals mehrere Wellenlängenfenster ausgewertet, die über einen Wellenlängenbereich von beispielsweise 400 nm bis 1400 nm verteilt angeordnet sein können und/oder diesen Wellenlängenbereich vollständig abdecken können. Beispielsweise können mindestens drei Wellenlängenfenster einschließlich zweier Wellenlängenfenster am Rand und eines Wellenlängenfensters in einem mittleren Abschnitt des interessierenden Wellenlängenbereichs von der Auswerteeinheit analysiert werden, wobei in jedem Wellenlängenfenster die Signalhöhe beispielsweise in Form eines im Fenster vorliegenden Mittelwerts und/oder andere Charakteristika wie Steigung, Krümmung, Maxima, Minima etc. betrachtet werden kann, um auf ein Tier schliessen zu können.

Vorteilhafterweise berücksichtigt die Auswerteeinheit mehrere Charakteristika des Signalverlaufs über die Wellenlänge, um auf das Vorhandensein eines Tiers rückzuschließen. Hierbei kann die Auswerteeinheit die genannten mehreren Charakteristika prinzipiell in unterschiedlicher Weise berücksichtigen, beispielsweise dahingehend, dass ein Tiererkennungssignal dann abgegeben wird, wenn alle der bei einer Tiererkennung üblicherweise zutreffenden Charakteristiken oder eine ausreichende Unteranzahl der mehreren Charakeristika, beispielsweise vier von fünf erfüllt sind. Hierbei können die Charakteristika bzw. Kriterien ggf. auch gewichtet werden, beispielsweise dahingehend, dass eine Tiererkennung angenommen wird, wenn von fünf Kriterien drei wichtige erfüllt und zwei weniger wichtige nicht erfüllt sind.

Um die Signalqualität des zumindest einen Sensors zu verbessern und die Abtastung verfälschender Einflüsse zu minimieren, ist gemäß der vorliegenden Erfindung vorgesehen, dass der Abtastbereich, insbesondere der die Arbeitsbahn bzw. den Boden überwachende Messfleck des Sensors abgeschattet wird. Eine Abschattungsvorrichtung verhindert, dass Umgebungsstrahlung wie beispielsweise Umgebungslicht auf den Messfleck fällt und/oder den Sensor erreicht, wobei eine solche Abschattungsvorrichtung beispielsweise ein den Erfassungsbereich des Sensors begrenzendes Rohr oder eine trichterförmige Hülle sein kann, die nach Art eines Fernrohrs an den Sensor gesetzt ist.

Zusätzlich zur Abschattung ist eine gezielte Beleuchtung des Abtastbereiches vorgesehen, und zwar in Form einer Beleuchtungsvorrichtung, die den Messfleck des Sensors am Boden bestrahlt, wobei beispielsweise ein Strahler zur Abgabe gerichteten Lichts vorgesehen sein kann, der zumindest näherungsweise parallel zur Blickrichtung des Sensors den abzutastenden Boden bestrahlt und/oder von oben nach unten auf den Messfleck strahlt.

Die genannte Beleuchtung kann vorteilhafterweise gepulst vorgesehen sein. Alternativ oder zusätzlich zu einer gepulsten Beleuchtung kann jedoch auch eine konstant arbeitende Beleuchtungsvorrichtung vorgesehen sein, die die abzutastende Arbeitsbahn konstant ausleuchtet.

Ist in der genannten Weise eine gepulste Beleuchtung vorgesehen, kann vorteilhafterweise die Pulsfrequenz der Beleuchtung auf zumindest einen Sensorkanal des zumindest einen Sensors abgestimmt sein. Insbesondere können die Beleuchtungsvorrichtung und der Sensor derart aufeinander abgestimmt sein, dass der Sensor synchron mit der Pulsung des Lichts ein Sensorsignal sendet. Durch eine solche Abstimmung von Lichtpulsfrequenz und Sensorsignalfrequenz kann sichergestellt werden, dass das Sensorsignal unter gezielt vorgegebenen Ausleuchtungsbedingungen erzeugt wurde, so dass Störeinflüsse minimiert werden können.

Alternativ oder zusätzlich zur Anpassung an die Pulsfrequenz kann der Sensor von seinem Erfassungsbereich her an den Wellenlängenbereich der Lichtquelle angepasst sein, insbesondere derart, dass die Lichtquelle Licht mit einem vorrangigen Wellenbereich abgibt und der Sensor in dem genannten, vorrangigen Wellenbereich eine vorzugsweise vorrangige Empfindlichkeit besitzt.

Alternativ oder zusätzlich können Störeinflüsse wie beispielsweise durch das Sonnenlicht auch druch eien Diffrenzmessungbeseitigt werden. Ist zumindest eine Beleuchtungsvorrichtung zum gepulsten oder ungepulsten Beleuchten des Abtastbereichs des zumindest einen Sensors am Boden vorgesehen ist, kann eine Differenzmesseinrichtung vorgesehen und dazu eingerichtet sein, aus der Differenz eines Sensorsognals, das bei gepulster oder ungepulster Beleuchtung des Abtastbereichs erzeugt wurde, und eines Sensorsignals, das bei unbeleuchtetem Abtastbereich erzeugt wurde, ein korrigiertes Sensorsignal, in dem die Einflüße des Sonnenlichts eliminiert sind, zu bestimmen.

Die genannte Beleuchtungsvorrichtung zur gezielten Ausleuchtung des Messflecks kann vorteilhafterweise in den Sensor integriert sein, so dass der zumindest eine Sensor und die Beleuchtungsvorrichtung eine modulare Baugruppe bilden, insbesondere eine vormontierbare Montageeinheit bilden können. Alternativ oder zusätzlich zu einer solchen in den Sensor integrierten Beleuchtungsvorrichtung kann auch eine Beleuchtungsvorrichtung in Nachbarschaft zum Sensor angebracht sein, insbesondere in unmittelbarer oder mittelbarer Nähe zum Sensor.

In vorteilhafter Weiterbildung der Erfindung können eine gepulst arbeitende Beleuchtungsvorrichtung und zumindest ein Sensor als synchronisierte Lock-in-Verstärker-Einheit ausgebildet sein. Vorteilhafterweise kann das vom Sensor bereitgestellte Sensorsignal in einem Pulsungsfenster oder mit einer Pulsfrequenz verstärkt werden, die der Pulsung bzw. Pulsfrequenz des von der Beleuchtungsvorrichtung abgegebenen Lichts entspricht.

In Weiterbildung der Erfindung kann der zumindest eine Sensor und/oder die Auswerteeinheit zum Auswerten des Sensorsignals dazu ausgebildet sein, zusätzliche externe Signale zu verarbeiten und/oder zu berücksichtigen, beispielsweise vom Fahrweg abgeleitete Signale und/oder ein GPS-Signal und/oder ein Zeitsignal berücksichtigen und/oder auswerten, beispielsweise dahingehend, dass die Pulsung weg- und/oder zeitabhängig variabel gesteuert wird, beispielsweise durch Erhöhung der Pulsfrequenz und/oder der Sensorfrequenz mit zunehmender Fahrgeschwindigkeit.

Alternativ oder zusätzlich zur Berücksichtigung eines Geschwindigkeitssignals kann vorteilhafterweise auch eine Umgebungslichtstärke Berücksichtigung finden, beispielsweise dahingehend, dass bei grellerem und/oder hellerem Licht mehr Pulse und/oder eine höhere Pulsfrequenz als bei schwächerem Licht vorgesehen werden.

Alternativ oder zusätzlich zu einem Infrarotsensor kann die Erfassungseinrichtung auch noch weitere Sensoriken umfassen, beispielsweise eine optische Kamera bzw. einen optischen Sensor, um im sichtbaren Bereich die Arbeitsbahn des Arbeitsaggregats abtasten bzw. ein Bild hiervon bereitstellen zu können. Die Auswerteeinheit kann die Auswertung des Infrarotsensor-Signals mit einer Auswertung des optischen Sensorsignals im sichtbaren Bereich verknüpfen, wobei beispielsweise das Sensorsignal des im sichtbaren Bereich arbeitenden Sensors einfach als Signal aus einem weiteren Wellenlängenfenster gewertet werden kann.

In vorteilhafter Weiterbildung der Erfindung kann ein optischer Sensor vorgesehen sein, der mindestens ein Optikelement wie beispielsweise eine Linse und/oder einen Reflektor aufweist und/oder mindestens eine Photodiode bzw. einen lichtempfindlichen Halbleiterbaustein umfasst. Die Verwendung einer solchen Photodiode erlaubt eine sehr kompakte, Platz sparende Bauweise und ermöglicht eine hohe Lichtempfindlichkeit mit feiner Signalauswertung.

Alternativ oder zusätzlich zu dem genannten Optikelement kann der Photodiode auch ein Filter zugeordnet sein, wobei der Filter das auf die Photodiode fallende Licht filtern kann und/oder das von der Photodiode bereitgestellte Signal filtern kann. Der genannte Filter kann vorteilhafterweise mit dem photosensitiven Halbleiterbaustein abgestimmt sein, um das auf die Photodiode fallende Licht so zu filtern, dass dieses an die Photosensitivität des Halbleiterbausteins angepasst ist.

Alternativ oder zusätzlich kann der Photodiode ein Verstärker zugeordnet sein, der in Weiterbildung der Erfindung unmittelbar nach der Photodiode vorgesehen sein kann, beispielsweise in den Halbleiterbaustein integriert sein kann. Ein solcher Verstärker kann das Signal der Photodiode direkt nach der Photodiode verstärken, wodurch die nachfolgende Signalverarbeitung deutlich erleichtert wird.

Das von dem zumindest einen Sensor bereitgestellte und ausgewertete Signal kann, wenn das Signal die Erfassung eines Tieres oder eines Steins oder eines Erdklumpens oder dergleichen anzeigt, in verschiedener Weise verwendet werden. Alternativ oder zusätzlich zu einer bloßen Anzeige für den Maschinenführer kann in Abhängigkeit des ausgewerteten Sensorsignals auch automatisch oder halbautomatisch in die Steuerung zumindest eines Maschinenparameters eingegriffen werden. Insbesondere kann eine Sicherheits- und/oder Schnellschaltvorrichtung aktiviert werden, mit Hilfe derer ein sicherheits- und/oder kollisionsrelevantes Maschinenteil, insbesondere das Arbeitsaggregat, in dessen Arbeitsbahn das Hindernis erfasst wurde, angehoben und/oder wegbewegt und/oder gestoppt und/oder gebremst und/oder abgekuppelt und/oder freigeschaltet werden, wobei beispielsweise das Anheben des Maschinenteils mittels eines Aktors der Sicherheits- und/oder Schnellschaltvorrichtung in an sich bekannter Weise erfolgen kann, beispielsweise unter Freischaltung eines Sonderenergiespeichers, der ein ausreichend schnelles Wegbewegen ermöglicht.

Alternativ oder zusätzlich kann auf Basis des ausgewerteten Sensorsignals bei Erkennen eines Tieres oder Steins oder Erdklumpens oder dergleichen auch ein Lenkhilfssignal generiert werden, das halbautomatisch oder automatisch umsetzbar ist, beispielsweise dergestalt, dass einem Maschinenführer ein Signal "scharf rechts" angezeigt wird. Vorzugsweise kann aber auch vollautomatisch in die Lenkung eingegriffen werden dergestalt, dass das Lenksignal in eine tatsächliche Lenkbewegung des Arbeitsgeräts bzw. des Schleppers, wenn das Arbeitsgerät als Anbaugerät ausgebildet ist, umgesetzt wird.

Alternativ oder zusätzlich zu einer solchen Lenkhilfevorrichtung kann auf Basis des ausgewerteten Sensorsignals auch eine Bremsvorrichtung aktiviert werden, um die Fahrgeschwindigkeit zu reduzieren bzw. das Arbeitsgerät zum Halten zu bringen. Die Aktivierung einer solchen Bremsvorrichtung kann wiederum halbautomatisch im Sinne einer Anzeige für den Maschinenführer umgesetzt werden, der dann die Bremse betätigt oder vorzugsweise auch vollautomatisch dadurch, dass die Bremse in Abhängigkeit des ausgewerteten Sensorsignals betätigt wird.

Gemäß einem weiteren Aspekt der Erfindung können für einen solchen Eingriff in die Maschinensteuerung wie beispielsweise automatisches Wegbewegen des Arbeitsaggregats und/oder Lenken des Schleppers und/oder Abbremsen der Fahrgeschwindigkeit die Sensorsignale bzw. die ausgewerteten Sensorsignale mit zumindest einem Schwellwert verglichen werden, so dass bei Überschreiten bzw. Unterschreiten eines Schwellwerts und/oder Verlassen eines Sollwertkorridors zwischen zwei Schwellwerten die entsprechende Maschinenreaktion ausgelöst bzw. veranlasst werden kann. Die genannten Schwellwerte können hierbei fest vorgegeben sein. Alternativ ist es im Sinne einer selbstlernenden Steuerung auch möglich, die Schwellwerte adaptiv an Daten bzw. Maschinensteuerungsmuster aus der Vergangenheit anzupassen, insbesondere dergestalt, dass Schwellwerte verändert werden, wenn ein Maschinenführer eine entsprechende Reaktion - beispielsweise das Anheben des Arbeitsaggregats oder das Abbremsen der Maschine - schon veranlasst hatte, bevor ein entsprechender Schwellwert erreicht wurde.

Alternativ oder zusätzlich kann ein Schwellwert auch dahingehend adaptiv angepasst werden, dass nach einem vormaligen Auslösen der Schnellschaltvorrichtung bei Erreichen des vormaligen Schwellwerts eine Gegenreaktion des Maschinenführers berücksichtigt wird, die das Auslösen wieder rückgängig macht, oder dass ein Ignorieren eines Lenkhilfesignals und/oder eines Bremssignals, das bei Erreichen des vormaligen Schwellwerts abgegeben wurde, durch den Maschinenführer zu einer entsprechenden Anpassung des Schwellwerts führt.

In vorteilhafter Weiterbildung der Erfindung kann das System derart ausgebildet sein, dass ein ausgewertetes Sensorsignal, das an sich eine Reaktion des Arbeitsgeräts auslösen würde bzw. zu einem Eingriff in die Steuerung zumindest eines Maschinenparameters führen würde, nicht zwingend zu einer solchen Reaktion der Maschine führen muss. Hierdurch kann dem Maschinenführer die vollständige Kontrolle erhalten werden. Dies kann beispielsweise dadurch bewerkstelligt sein, dass ein auch vollautomatisch umgesetztes Lenkhilfesignal vom Maschinenführer unterbunden und/oder rückgängig gemacht werden kann, beispielsweise dadurch, dass der Maschinenführer wieder gegenlenkt und/oder das Lenkrad festhält, so dass die Umsetzung des Lenkhilfesignals unterbrochen bzw. gestoppt wird. In ähnlicher Weise kann dies bei der Umsetzung anderer Maschinenreaktionen wie beispielsweise einem Abbremsen oder einem Anheben des Arbeitsaggregats erfolgen, beispielsweise wenn der Maschinenführer durch stärkeres Niederdrücken des Gaspedals anzeigt, dass er das Sensorsignal für eine Fehlmeldung hält.

Das Auswerte- und/oder Umsetzungssystem, welches auf Basis des ausgewerteten Sensorsignals Maschinenreaktionen veranlasst, ist in vorteilhafter Weise schneller arbeitend als die menschliche Reaktionszeit ausgebildet. Insbesondere kann ein entsprechendes Reaktionssignal innert zwei Sekunden bei Erkennung eines Tiers und/oder eines Steins und/oder eines Erdklumpens oder dergleichen eine Reaktion der Maschine auslösbar sein.

Die Erfindung wird nachfolgend anhand eines bevorzugten Ausführungsbeispiels und einer zugehörigen Zeichnung näher erläutert. In der Zeichnung zeigt:

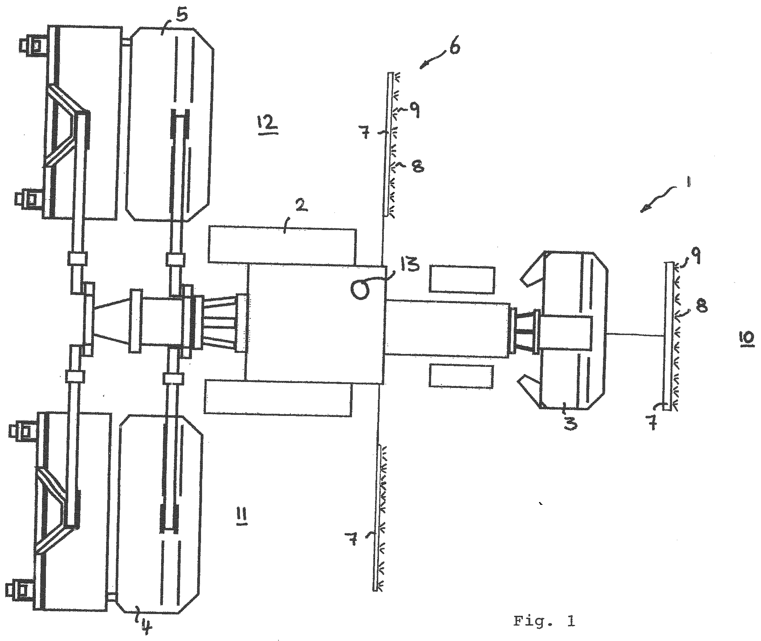

- Fig. 1:: eine schematische Draufsicht auf ein landwirtschaftliches Arbeitsgerät nach einer vorteilhaften Ausführung der Erfindung in Form einer als Anbaugerät ausgebildeten Mähmaschine, wobei eine Erkennungseinrichtung zur Tiererkennung vorgesehen ist und mehrere den verschiedenen Mähwerkseinheiten der Mähmaschine zugeordnete Sensorbalken umfasst.

Wie Fig. 1 zeigt, kann das landwirtschaftliche Arbeitsgerät, bei dem die Tiererkennung besonders sinnvoll eingesetzt sein kann, als Mähmaschine 1 ausgebildet sein, die an einen Schlepper 2 anbaubar ausgebildet sein kann, beispielsweise in an sich bekannter Weise durch eine Dreipunktanlenkung umfassend Oberlenker und Unterlenker an den Schlepper 2 angebaut werden kann. Die Mähmaschine 1 kann dabei eine Mähwerkskombination von frontseitig und heckseitig angebauten Mähwerkseinheiten bilden, ggf. aber auch aus nur einer oder nur front- oder heckseitig angebauten Mähwerkseinheiten bestehen.

Die Tiererkennung kann jedoch auch bei anderen landwirtschaftlichen Arbeitsgeräten, insbesondere anderen Grünland- und/oder Erntegeräten verwendet werden.

Um in den Fahrspuren der einzelnen Mähwerkseinheiten 3, 4 und 5 befindliche Tiere wie beispielsweise Rehkitze oder Hasen erfassen zu können, ist eine Erfassungseinrichtung 6 vorgesehen, die mehrere Sensorbalken 7 umfassen kann, die den einzelnen Fahrspuren der genannten Mähwerkseinheiten 3, 4 und 5 zugeordnet sein können. Wie Fig. 1 zeigt, können die genannten Sensorbalken 7 dabei den Arbeitsaggregaten selbst zugeordnet bzw. daran befestigt sein, aber auch am Schlepper 2 vorgesehen sein, wobei die Sensorbalken 7 vorteilhafterweise vor und/oder über den Arbeitsaggregaten angeordnet sind. Gegebenenfalls kann die Erfassungseinrichtung auch den Fahrspurbereich neben den aktuellen Fahrspuren beobachten, der dann in einem nächsten Durchgang oder einer nächsten Fahrtschleife bearbeitet wird, wobei erfasste Tiere bzw. dazugehörige Ort, an dem ein Tier erfasst wurde, in einem Navigationssystem abgespeichert und das Warnsignal dann bei Annährung an den abgespeicherten Ort ausgegeben werden kann.

Die Erfassungseinrichtung 6 kann an den genannten Sensorbalken 7 verteilt mehrere Infrarotsensoren umfassen, die näherungsweise senkrecht auf den Boden gerichtet sein können und/oder auch in Fahrtrichtung schräg nach vorne, ggf. auch schräg nach hinten blicken können und vorteilhafterweise einen Erfassungsbereich von +/-45° besitzen können. Vorteilhafterweise sind die Infrarotsensoren 8 in einem Abstand von 0,2 m bis 4 m, insbesondere etwa 0,5 m bis 1,5 m über dem Boden angeordnet, um eine hohe Erfassungsgenauigkeit zu erreichen.

Alternativ oder zusätzlich zu den genannten Infrarotsensoren 8, die im Nahinfrarotbereich arbeiten können, kann die Erfassungseinrichtung 6 auch optische Sensoren 9, die im für das menschliche Auge sichtbaren Bereich arbeiten, aufweisen, beispielsweise in Form von Photodioden und/oder im sichtbaren Infrarotbereich und/oder im sichtbaren Lichtspektrum arbeitende Optiksensoren, die ebenfalls an den genannten Sensorbalken 7 angeordnet sein können, ggf. aber auch am Schlepper 2 und/oder an anderer Stelle des Arbeitsgeräts oder des Schleppers angebracht sein können. Die genannten Optiksensoren können hinsichtlich ihres Abtastbereichs wie zuvor erläutert ausgebildet sein.

Die genannten Infrarot- und/oder Optiksensoren 8 bzw. 9 arbeiten vorteilhafterweise über einen breiteren Wellenlängenbereich von zumindest 800 bis 1300, vorteilhafterweise 400 bis 1400, weiter vorteilhafterweise 400 bis 1700 nm und können beispielsweise als Breitbandsensoren ausgebildet sein. Alternativ oder zusätzlich können dabei mehrere Sensoren in Kombination miteinander Verwendung finden, deren Arbeits-Wellenlängenbereiche sich ergänzen, um den genannten Wellenlängenbereich abzudecken.

Die den Boden im Bereich der Fahrspuren abtastenden Sensoren können dabei je nach Typus und Charakteristik des im abgetasteten Bereich befindlichen Objekts verschieden ausgebildete Signale liefern.

Im Übrigen wird hinsichtlich der Anordnung, Ausbildung und Arbeitsweise der Sensoren auf die detaillierte Erläuterung in der Beschreibungseinleitung verwiesen.

## Patentansprüche

1. Landwirtschaftliches Arbeitsgerät mit zumindest einem Arbeitsaggregat (3, 4, 5) und einer Erfassungseinrichtung (6) zum Erfassen von Tieren in der Arbeitsbahn (10, 11, 12) des Arbeitsaggregats (3, 4, 5), wobei die Erfassungseinrichtung (6) zumindest einen Sensor (8, 9) zum Abtasten der Arbeitsbahn (10, 11, 12) des Arbeitsaggregats (3, 4, 5) und eine Auswerteeinheit (13) zum Auswerten des Signals des Sensor (8, 9) zur Tiererkennung aufweist, wobei
eine Sicherheits- und Schnellschaltvorrichtung zum Anheben und/oder Wegbewegen und/oder Stoppen und/oder Bremsen und/oder Abkuppeln und/oder Freischalten eines sicherheits- und/oder kollisionsrelevanten Maschinenteils vorgesehen und in Abhängigkeit des Sensorsignals des zumindest einen Sensors (8, 9) ansteuerbar ist,
und eine Vergleichsvorrichtung zum Vergleichen des Sensorsignals und/oder eines ausgewerteten Sensorsignals mit zumindest einem Schwellwert vorgesehen ist und die Sicherheits- und Schnellschaltvorrichtung bei Überschreiten und/oder Unterschreiten des zumindest einen Schwellwerts aktivierbar ausgebildet sind,
**dadurch gekennzeichnet, dass**
der zumindest eine Sensor (8, 9) ein Breitbandsensor ist und/oder mehrere Sensoren (8, 9), die in verschiedenen Wellenlängenbereichen arbeiten, vorgesehen sind und die Auswerteeinheit (13) derart ausgebildet ist, dass ein Signal des zumindest einen Sensors (8, 9) in verschiedenen Wellenlängenfenstern ausgewertet wird, wobei ein Signalverlauf (K) über die Wellenlänge (λ) für zumindest einen Teil des Wellenlängenbereichs des zumindest einen Sensors (8, 9) bestimmt und aus dem Signalverlauf (K) über die Wellenlänge (λ) das Vorhandensein eines Tiers bestimmt wird, wobei eine Abschattungsvorrichtung zum Abschatten des bodenseitigen Messflecks des zumindest einen Sensors (8, 9) und eine Beleuchtungsvorrichtung zum gezielten Beleuchten des bodenseitigen Messflecks des zumindest einen Sensors vorgesehen ist, wobei die Abschattungsvorrichtung dazu ausgebildet ist, Umgebungslicht und/oder - strahlung von dem Messfleck fernzuhalten und nur von dem beleuchteten Messfleck kommende/s Licht und/oder Strahlung auf den zumindest einen Sensor fallen zu lassen.

2. Landwirtschaftliches Arbeitsgerät nach dem vorhergehenden Anspruch, wobei eine adaptive Schwellwert-Anpassvorrichtung zum Anpassen des zumindest einen Schwellwerts in Abhängigkeit gespeicherter Maschinenbetriebsdaten vorgesehen ist.

3. Landwirtschaftliches Arbeitsgerät nach dem vorhergehenden Anspruch, wobei der zumindest eine Sensor (8, 9) als Infrarotsensor, insbesondere im Nahinfrarotbereich arbeitender Sensor, und/oder als optischer Sensor, der im für das menschliche Auge sichtbaren Bereich und/oder im sichtbaren Infrarotbereich arbeitet, mit einem Abtastbereich von +/-10° bis +/-65° mit einer nach unten gerichteten Hauptabtastrichtung ausgebildet ist, wobei der Abtastbereich des zumindest einen Sensors (8, 9) einen Bereich von +/-35° bis +/-55°, insbesondere etwa +/-45°, abdeckt und eine Senkrechte auf den Boden und/oder eine Vertikale umfasst, insbesondere etwa mittig einschließt, wobei der zumindest eine Sensor (8, 9) derart ausgebildet und angeordnet ist, dass ein Messfleck des Sensors auf dem Boden einen Durchmesser oder eine Diagonale im Bereich von 5 bis 20 cm besitzt.

4. Landwirtschaftliches Arbeitsgerät nach einem der vorhergehenden Ansprüche, wobei der zumindest eine Sensor (8, 9) in Fahrtrichtung betrachtet vor und/oder überhalb des Arbeitsaggregats (3, 4, 5) in einer Höhe von 0,2 m bis 4 m, vorzugsweise 0,5 m bis 1,5 m, über dem Boden angeordnet ist.

5. Landwirtschaftliches Arbeitsgerät nach einem der vorhergehenden Ansprüche, wobei der zumindest eine Sensor (8, 9) beweglich gelagert ist derart, dass der Abtastbereich des Sensors verstellbar und/oder im Arbeitsbetrieb hin und her bewegbar ist.

6. Landwirtschaftliches Arbeitsgerät nach einem der vorhergehenden Ansprüche, wobei mehrere Sensoren (8, 9) an einem Sensorbalken angeordnet sind, der zumindest abschnittsweise in verschiedene Stellungen verlagerbar ausgebildet ist, insbesondere zwischen einer Transportstellung und einer Arbeitsstellung verlagerbar, vorzugsweise schwenkbar oder klappbar gelagert und/oder teleskopierbar und/oder ein- und ausschiebbar ausgebildet ist.

7. Landwirtschaftliches Arbeitsgerät nach dem vorhergehenden Anspruch, wobei der Sensorbalken in Abhängigkeit zumindest eines Betriebsparameters des Arbeitsgeräts und/oder eines damit verbundenen Schleppers, insbesondere einer Fahrgeschwindigkeit und/oder eines Lenkwinkels, automatisch verlagerbar gesteuert ist.

8. Landwirtschaftliches Arbeitsgerät nach einem der vorhergehenden Ansprüche, wobei eine Lenkhilfevorrichtung zum Abgeben eines Lenkhilfesignals in Abhängigkeit des Sensorsignals des zumindest einen Sensors (8, 9) vorgesehen ist und eine Bremsvorrichtung zum Bremsen der Fahrgeschwindigkeit in Abhängigkeit des Sensorsignals des zumindest einen Sensors (8, 9) vorgesehen ist.

9. Landwirtschaftliches Arbeitsgerät nach einem der vorhergehenden Ansprüche, wobei zumindest eine Beleuchtungsvorrichtung zum ungepulsten Beleuchten des Abtastbereichs des zumindest einen Sensors am Boden vorgesehen ist und eine Differenzmesseinrichtung vorgesehen ist, die dazu eingerichtet ist, aus der Differenz eines Sensorsognals, das bei gepulster oder ungepulster Beleuchtung des Abtastbereichs erzeugt wurde, und eines Sensorsignals, das bei unbeleuchtetem Abtastbereich erzeugt wurde, ein korrigiertes Sensorsignal, in dem die Einflüße des Sonnenlichts eliminiert sind, zu bestimmen.

10. Landwirtschaftliches Arbeitsgerät nach einem der vorhergehenden Ansprüche, wobei der Signalverlauf über einen Wellenlängenbereich von zumindest 700 nm bis 1200 nm, vorzugsweise 400 nm bis 1400 nm, bestimmt wird und der zumindest eine Sensor (8) eine Bandbreite von zumindest 700 nm bis 1400 nm aufweist und/oder mehrere Infrarotsensoren (8) vorgesehen sind, deren Bandbreiten sich zu einer Gesamtbandbreite von zumindest 700 nm bis 1400 nm ergänzen, so dass ein Infrarotsensorsignal oder mehrere Infrarotsensorsignale über die genannte Bandbreite von zumindest 700 bis 1400 nm, vorzugsweise 400 nm bis 1400nm bereitstellbar ist/sind.

11. Landwirtschaftliches Arbeitsgerät nach einem der vorhergehenden Ansprüche, wobei der zumindest eine Sensor (8, 9) und eine/die Beleuchtungsvorrichtung in ein gemeinsames Sensormodul integriert sind, wobei die Beleuchtungsvorrichtung benachbart zu dem zumindest einen Sensor (8, 9), insbesondere unmittelbar neben dem Sensor (8, 9), angeordnet ist.

12. Landwirtschaftliches Arbeitsgerät nach einem der vorhergehenden Ansprüche, wobei der zumindest eine Sensor (8, 9) hinsichtlich zumindest eines Erfassungsparameters und/oder Betriebsparameters in Abhängigkeit zumindest eines externen Signals einstellbar ausgebildet ist, wobei
- eine Sensorsignalfrequenz in Abhängigkeit der Umgebungslichtstärke und/oder -farbe und/oder in Abhängigkeit einer Lichtpulsfrequenz einer Beleuchtungsvorrichtung einstellbar ist, und/oder
- die Beleuchtungsvorrichtung zum Beleuchten des bodenseitigen Messflecks des zumindest einen Sensors (8, 9) vorgesehen ist, die in zumindest einem Betriebsparameter in Abhängigkeit eines externen Signals einstellbar ausgebildet ist, wobei zumindest eine Lichtpulsfrequenz der Beleuchtungsvorrichtung in Abhängigkeit des Umgebungslichts variabel einstellbar, insbesondere mit zunehmend grellerem Umgebungslicht eine höhere Pulsfrequenz automatisch einstellbar ist.

13. Landwirtschaftliches Arbeitsgerät nach dem vorhergehenden Anspruch, wobei die Sensorsignalfrequenz und/oder die Lichtpulsfrequenz in Abhängigkeit eines Fahrgeschwindigkeitssignals automatisch einstellbar ausgebildet ist.

14. Landwirtschaftliches Arbeitsgerät nach einem der vorhergehenden Ansprüche, wobei der zumindest eine Sensor (8, 9) zumindest ein Optikelement in Form einer Linse und/oder in Form eines Reflektors und zumindest eine Photodiode umfasst.

15. Landwirtschaftliches Arbeitsgerät nach dem vorhergehenden Anspruch, wobei die zumindest eine Photodiode als lichtempfindliches Halbleiterbauelement ausgebildet ist und zumindest ein Filter der Photodiode zugeordnet ist, wobei ein Verstärker zum Verstärken des Signals der zumindest einen Photodiode vorgesehen, insbesondere direkt nach der Photodiode angeordnet ist und dazu ausgebildet ist, das Signal der Photodiode direkt nach der Photodiode zu verstärken.

16. Landwirtschaftliches Arbeitsgerät nach einem der vorhergehenden Ansprüche, wobei eine manuell betätigbare, übergeordnete Steuerungsvorrichtung zum Ausschalten und/oder Übersteuern der automatischen Betätigung der Schnellschaltvorrichtung und/oder Lenkhilfevorrichtung und/oder Bremsvorrichtung vorgesehen ist , wobei die übergeordnete Steuerungsvorrichtung
- einen manuellen Betätigungsmodus aufweist, in dem die automatische Betätigung der Schnellschaltvorrichtung und/oder Lenkhilfevorrichtung und/oder Bremsvorrichtung manuell ausschaltbar oder übersteuerbar ist,
- einen automatischen Signalbetätigungsmodus aufweist, in dem die Betätigung der Schnellschaltvorrichtung und/oder Lenkhilfevorrichtung und/oder Bremsvorrichtung in Abhängigkeit eines externen Signals, das einen Betriebszustand des Arbeitsgeräts, insbesondere dessen Fahrgeschwindigkeit und/oder Stillstand, angibt, automatisch ausgeschaltet oder übersteuert wird.

## Claims

1. Agricultural working machine having at least one piece of working equipment (3, 4, 5) and a detection device (6) for detecting animals in the working path (10, 11, 12) of the piece of working equipment (3, 4, 5), wherein the detection device (6) has at least one sensor (8, 9) for scanning the working path (10, 11, 12) of the piece of working equipment (3, 4, 5) and an evaluation unit (13) for evaluating the signal of the sensor (8, 9) for animal recognition, wherein
a safety and fast switching device for raising and/or moving away and/or stopping and/or braking and/or decoupling and/or releasing a safety relevant and/or collision relevant machine part is provided and is controllable in dependence on the sensor signal of the at least one sensor (8, 9),
and a comparison device for comparing the sensor signal and/or an evaluated sensor signal with at least one threshold value is provided and the safety and fast switching device is configured as activatable on an exceeding and/or falling below of the at least one threshold value,
**characterized in that**
the at least one sensor (8, 9) is a broadband sensor and/or a plurality of sensors (8, 9) that work in different wavelength ranges are provided and the evaluation unit (13) is configured such that a signal of the at least one sensor (8, 9) is evaluated in different wavelength windows, with a signal sequence (K) over the wavelength (λ) being determined for at least some of the wavelength range of the at least one sensor (8, 9) and with the presence of an animal being determined from the signal sequence (K) over the wavelength (λ), wherein a shading device for shading the measurement spot of the at least one sensor (8, 9) on the ground side and an illumination device for targeted illumination of the measurement spot of the at least one sensor on the ground side are provided, with the shading device being configured to keep environmental light and/or environmental radiation away from the measurement spot and to allow only light and/or radiation coming from the illuminated measurement spot to be incident on the at least one sensor.

2. Agricultural working machine in accordance with the preceding claim, wherein an adaptive threshold adaptation device for adapting the at least one threshold value in dependence on stored machine operating data is provided.

3. Agricultural working machine in accordance with the preceding claim, wherein the at least one sensor (8, 9) is configured as an infrared sensor, in particular as a sensor working in the near infrared range, and/or as an optical sensor that works in the range visible to the human eye and/or in the visible infrared range, with a scanning region from +/-10° to +/-65° having a main scanning direction directed downward, with the scanning region of the at least one sensor (8, 9) covering a region from +/-35° to +/-55°, in particular approximately +/-45°, and comprising a perpendicular to the ground and/or a vertical, in particular including it approximately centrally, with the at least one sensor (8, 9) being configured and arranged such that a measurement spot of the sensor has a diameter or a diagonal on the ground in the range from 5 to 20 cm.

4. Agricultural working machine in accordance with one of the preceding claims, wherein the at least one sensor (8, 9) is arranged, viewed in the direction of travel, in front of and/or above the piece of working equipment (3, 4, 5) at a height of 0.2 m to 4 m, preferably 0.5 m to 1.5 m, above the ground.

5. Agricultural working machine in accordance with one of the preceding claims, wherein the at least one sensor (8, 9) is movably supported such that the scanning region of the sensor is adjustable and/or movable to and fro in working operation.

6. Agricultural working machine in accordance with one of the preceding claims, wherein a plurality of sensors (8, 9) are arranged on a sensor bar that is configured as at least sectionally displaceable into different positions, in particular displaceable between a transport position and a working position, is preferably pivotably or foldably supported and/or is configured as telescopic and/or able to be retracted and extended.

7. Agricultural working machine in accordance with the preceding claim, wherein the sensor bar is controlled in an automatically displaceable manner in dependence on at least one operating parameter of the working machine and/or of a tractor connected thereto, in particular a travel speed and/or a steering angle.

8. Agricultural working machine in accordance with one of the preceding claims, wherein a steering aid device for emitting a steering aid signal in dependence on the sensor signal of the at least one sensor (8, 9) is provided and a braking device for braking the travel speed in dependence on the sensor signal of the at least one sensor (8, 9) is provided.

9. Agricultural working machine in accordance with one of the preceding claims, wherein at least one illumination device for the non-pulsed illumination of the scanning region of the at least one sensor on the ground is provided and a difference measurement device is provided that is adapted to determine, from the difference of a sensor signal that was generated with pulsed or non-pulsed illumination of the scanning region and a sensor signal that was generated with an unilluminated scanning region, a corrected sensor signal in which the influences of sunlight have been eliminated.

10. Agricultural working machine in accordance with one of the preceding claims, wherein the signal sequence is determined over a wavelength range of at least 700 nm to 1200 nm, preferably 400 nm to 1400 nm, and the at least one sensor (8) has a bandwidth of at least 700 nm to 1400 nm and/or a plurality of infrared sensors (8) are provided whose bandwidths add up to a total bandwidth of at least 700 nm to 1400 nm so that an infrared sensor signal or a plurality of infrared sensor signals can be provided over said bandwidth of at least 700 to 1400 nm, preferably 400 nm to 1400 nm.

11. Agricultural working machine in accordance with one of the preceding claims, wherein the at least one sensor (8, 9) and a/the illumination device are integrated in a common sensor module, with the illumination device being arranged adjacent to the at least one sensor (8, 9), in particular directly next to the sensor (8, 9).

12. Agricultural working machine in accordance with one of the preceding claims, wherein the at least one sensor (8, 9) is configured as settable with respect to at least one detection parameter and/or operating parameter in dependence on at least one external signal, wherein
- a sensor signal frequency is settable in dependence on the environmental luminosity and/or on the environmental light color and/or in dependence on a light pulse frequency of an illumination device; and/or
- the illumination device for illuminating the measurement spot of the at least one sensor (8, 9) on the ground side is provided that is configured as settable in at least one operating parameter in dependence on an external signal, with at least one light pulse frequency of the illumination device being variably settable depending on the environmental light, with in particular a higher pulse frequency being automatically settable with an increasingly brighter environmental light.

13. Agricultural working machine in accordance with the preceding claim, wherein the sensor signal frequency and/or the light pulse frequency is configured as automatically settable in dependence on a travel speed signal.

14. Agricultural working machine in accordance with one of the preceding claims, wherein the at least one sensor (8, 9) comprises at least one optical element in the form of a lens and/or in the form of a reflector and at least one photodiode.

15. Agricultural working machine in accordance with the preceding claim, wherein the at least one photodiode is configured as a light-sensitive semiconductor component and at least one filter is associated with the photodiode, wherein an amplifier for amplifying the signal of the at least one photodiode is provided, in particular arranged directly after the photodiode, and configured to amplify the signal of the photodiode directly after the photodiode.

16. Agricultural working machine in accordance with one of the preceding claims, wherein a manually actuable, higher-ranking control device for switching off and/or overriding the automatic actuation of the fast switching device and/or steering aid device and/or braking device is provided, wherein the higher-ranking control device
- has a manual actuation mode in which the automatic actuation of the fast switching device and/or steering aid device and/or braking device can be manually switched off or overridden;
- has an automatic signal actuation mode in which the actuation of the fast switching device and/or steering aid device and/or braking device is automatically switched off or overridden in dependence on an external signal that indicates an operating state of the working machine, in particular its travel speed and/or stationary state.

## Revendications

1. Engin de travail agricole comprenant au moins un organe de travail (3, 4, 5) et un moyen de détection (6) pour détecter des animaux dans la voie de travail (10, **11,** 12) de l'organe de travail (3, 4, 5), le moyen de détection (6) comportant au moins un capteur (8, 9) pour balayer la voie de travail (10, **11,** 12) de l'organe de travail (3, 4, 5) et une unité d'évaluation (13) pour évaluer le signal du capteur (8, 9) pour la détection d'animaux, dans lequel
un dispositif de sécurité et de commutation rapide est prévu pour relever et/ou éloigner et/ou arrêter et/ou freiner et/ou découpler et/ou débloquer une partie de machine relative à la sécurité et/ou aux collisions et peut être commandé en fonction du signal de capteur de l'au moins un capteur (8, 9),
et un dispositif de comparaison est prévu pour comparer le signal de capteur et/ou un signal de capteur évalué avec au moins une valeur seuil et le dispositif de sécurité et de commutation rapide est réalisé de façon à pouvoir être activé lors du dépassement au-dessus et/ou au-dessous de l'au moins une valeur seuil,
**caractérisé en ce que**
l'au moins un capteur (8, 9) est un capteur à large bande et/ou plusieurs capteurs (8, 9), qui fonctionnent dans différentes plages de longueur d'onde, sont prévus et l'unité d'évaluation (13) est réalisée de telle manière qu'un signal de l'au moins un capteur (8, 9) est évalué dans différentes fenêtres de longueur d'onde, une variation de signal (K) étant déterminée sur la longueur d'onde (λ) pour au moins une partie de la plage de longueur d'onde de l'au moins un capteur (8, 9) et la présence d'un animal étant déterminée à partir de la variation de signal (K) sur la longueur d'onde (λ), un dispositif d'occultation étant prévu pour occulter le spot de mesure côté sol de l'au moins un capteur (8, 9) et un dispositif d'éclairage étant prévu pour l'éclairage ciblé du spot de mesure côté sol de l'au moins un capteur, le dispositif d'occultation étant conçu pour tenir à l'écart du spot de mesure la lumière ambiante et/ou un rayonnement ambiant et laisser tomber sur l'au moins un capteur uniquement la lumière et/ou le rayonnement venant du spot de mesure éclairé.

2. Engin de travail agricole selon la revendication précédente, dans lequel un dispositif d'adaptation de valeur seuil autoajustable est prévu pour adapter l'au moins une valeur seuil en fonction de données de fonctionnement de machine enregistrées.

3. Engin de travail agricole selon la revendication précédente, dans lequel l'au moins un capteur (8, 9) est réalisé sous la forme d'un capteur infrarouge, en particulier d'un capteur fonctionnant dans l'infrarouge proche, et/ou sous la forme d'un capteur optique, qui fonctionne dans la plage visible pour l'œil humain et/ou dans l'infrarouge visible, avec une zone de balayage de +/- 10° à +/- 65° avec une direction de balayage principale orientée vers le bas, la zone de balayage de l'au moins un capteur (8, 9) couvrant une zone de +/- 35° à +/-55°, en particulier environ +/- 45°, et comprenant, en particulier incluant approximativement au centre, une perpendiculaire au sol et/ou une verticale, l'au moins un capteur (8, 9) étant conçu et disposé de telle manière qu'un spot de mesure du capteur sur le sol possède un diamètre ou une diagonale compris entre 5 et 20 cm.

4. Engin de travail agricole selon l'une des revendications précédentes, dans lequel l'au moins un capteur (8, 9) est disposé, vu dans le sens de la marche, devant et/ou au-dessus de l'organe de travail (3, 4, 5) à une hauteur de 0,2 m à 4 m, de préférence 0,5 m à 1,5 m, au-dessus du sol.

5. Engin de travail agricole selon l'une des revendications précédentes, dans lequel l'au moins un capteur (8, 9) est monté mobile de telle manière que la zone de balayage du capteur peut être réglée et/ou déplacée dans un mouvement de va-et-vient en mode travail.

6. Engin de travail agricole selon l'une des revendications précédentes, dans lequel plusieurs capteurs (8, 9) sont disposés sur une barre de capteurs, qui est réalisée au moins sur certaines parties de manière déplaçable dans différentes positions, en particulier déplaçable entre une position de transport et une position de travail, de préférence montée pivotante ou rabattable et/ou réalisée de manière télescopique et/ou rétractable et déployable.

7. Engin de travail agricole selon la revendication précédente, dans lequel la barre de capteurs est commandée de manière déplaçable automatiquement en fonction d'au moins un paramètre de fonctionnement de l'engin de travail et/ou d'un tracteur relié à celui-ci, en particulier d'une vitesse de déplacement et/ou d'un angle de direction.

8. Engin de travail agricole selon l'une des revendications précédentes, dans lequel un dispositif de direction assistée est prévu pour délivrer un signal de direction assistée en fonction du signal de capteur de l'au moins un capteur (8, 9) et un dispositif de freinage est prévu pour freiner la vitesse de déplacement en fonction du signal de capteur de l'au moins un capteur (8, 9).

9. Engin de travail agricole selon l'une des revendications précédentes, dans lequel au moins un dispositif d'éclairage est prévu pour l'éclairage non pulsé de la zone de balayage de l'au moins un capteur sur le sol et un moyen de mesure de différence est prévu, qui est configuré pour déterminer, à partir de la différence entre un signal de capteur qui a été généré avec un éclairage pulsé ou non pulsé de la zone de balayage et un signal de capteur qui a été généré avec une zone de balayage non éclairée, un signal de capteur corrigé, dans lequel les influences de la lumière du soleil sont éliminées.

10. Engin de travail agricole selon l'une des revendications précédentes, dans lequel la variation du signal est déterminée sur une plage de longueur d'onde d'au moins 700 nm à 1200 nm, de préférence 400 nm à 1400 nm, et l'au moins un capteur (8) présente une largeur de bande d'au moins 700 nm à 1400 nm et/ou plusieurs capteurs infrarouges (8) sont prévus, dont les largeurs de bande se complètent pour obtenir une largeur de bande totale d'au moins 700 nm à 1400 nm, de telle sorte qu'un signal de capteur infrarouge ou plusieurs signaux de capteur infrarouge peut/peuvent être fourni(s) sur ladite largeur de bande d'au moins 700 à 1400 nm, de préférence 400 nm à 1400 nm.

11. Engin de travail agricole selon l'une des revendications précédentes, dans lequel l'au moins un capteur (8, 9) et un/le dispositif d'éclairage sont intégrés dans un module de capteur commun, le dispositif d'éclairage étant disposé avoisinant l'au moins un capteur (8, 9), en particulier directement à côté du capteur (8, 9).

12. Engin de travail agricole selon l'une des revendications précédentes, dans lequel l'au moins un capteur (8, 9) est réalisé, en ce qui concerne au moins un paramètre de détection et/ou paramètre de fonctionnement, de manière réglable en fonction d'au moins un signal externe, dans lequel
- une fréquence de signal de capteur peut être réglée en fonction de l'intensité et/ou de la couleur de la lumière ambiante et/ou en fonction d'une fréquence d'impulsion lumineuse d'un dispositif d'éclairage, et/ou
- le dispositif d'éclairage est prévu pour éclairer le spot de mesure côté sol de l'au moins un capteur (8, 9), qui est réalisé de manière réglable dans au moins un paramètre de fonctionnement en fonction d'un signal externe, au moins une fréquence d'impulsion lumineuse du dispositif d'éclairage pouvant être réglée de manière variable en fonction de la lumière ambiante, en particulier une fréquence d'impulsion plus élevée pouvant être réglée automatiquement au fur et à mesure que la lumière ambiante devient plus éblouissante.

13. Engin de travail agricole selon la revendication précédente, dans lequel la fréquence de signal de capteur et/ou la fréquence d'impulsion lumineuse est réalisée de manière réglable automatiquement en fonction d'un signal de vitesse de déplacement.

14. Engin de travail agricole selon l'une des revendications précédentes, dans lequel l'au moins un capteur (8, 9) comprend au moins un élément optique sous la forme d'une lentille et/ou sous la forme d'un réflecteur et au moins une photodiode.

15. Engin de travail agricole selon la revendication précédente, dans lequel l'au moins une photodiode est réalisée sous la forme d'un composant semiconducteur sensible à la lumière et au moins un filtre est associé à la photodiode, un amplificateur pour amplifier le signal de l'au moins une photodiode étant prévu, en particulier disposé directement après la photodiode, et étant conçu pour amplifier le signal de la photodiode directement après la photodiode.

16. Engin de travail agricole selon l'une des revendications précédentes, dans lequel un dispositif de commande supérieur, à actionnement manuel, est prévu pour désactiver et/ou contourner l'actionnement automatique du dispositif de commutation rapide et/ou du dispositif de direction assistée et/ou du dispositif de freinage, dans lequel le dispositif de commande supérieur
- présente un mode d'actionnement manuel, dans lequel l'actionnement automatique du dispositif de commutation rapide et/ou du dispositif de direction assistée et/ou du dispositif de freinage peut être désactivé ou contourné manuellement,
- présente un mode d'actionnement de signal automatique, dans lequel l'actionnement du dispositif de commutation rapide et/ou du dispositif de direction assistée et/ou du dispositif de freinage est automatiquement désactivé ou contourné en fonction d'un signal externe, qui indique un état de fonctionnement de l'engin de travail, en particulier sa vitesse de déplacement et/ou son arrêt.
